# EUROPEAN PATENT APPLICATION

(11) **EP 4 757 023 A1**
(43) Date of publication of application: **10.06.2026**
(21) Application number: 24848196.2
(22) Date of filing: 26.07.2024
(51) Int. Cl.: H01M 50/204, H01M 50/502, H01M 50/507, H01M 10/42, H01M 10/61

(54) **ENERGY STORAGE DEVICE AND ENERGY STORAGE SYSTEM**

(30) Priority: 31.07.2023 CN 202310957876; 31.07.2023 CN 202322068674 U
(71) Applicant: BYD Company Limited, Shenzhen, Guangdong 518118 (CN)
(72) Inventor: WANG, Dong, Shenzhen, Guangdong 518118 (CN); XU, Changxi, Shenzhen, Guangdong 518118 (CN); YIN, Xueqin, Shenzhen, Guangdong 518118 (CN); LI, Shanpeng, Shenzhen, Guangdong 518118 (CN); YIN, Xiaoqiang, Shenzhen, Guangdong 518118 (CN)
(74) Representative: Mathys & Squire
(86) International application number: PCT/CN2024/107965
(87) International publication number: WO 2025/026239

(57) **Abstract**

Disclosed are an energy storage apparatus and an energy storage system. The energy storage apparatus includes an electrical compartment and a battery compartment. The electrical compartment has a first end and a second end that are disposed opposite to each other in a first direction. The battery compartment is connected to a second end of the electrical compartment. The electrical compartment has an electrical chamber and an opening portion communicating with the electrical chamber. The opening portion is disposed on an end face of the first end of the electrical compartment. An electrical compartment door is disposed in the opening portion. An electrical control device is disposed in the electrical chamber.

## Description

### CROSS-REFERENCE TO RELATED APPLICATIONS

This application claims priorities to Chinese Patent Application No. 202310957876.4, entitled "ENERGY STORAGE APPARATUS AND ENERGY STORAGE SYSTEMS", and to Chinese Patent Application No. 202322068674.2, entitled "ENERGY STORAGE APPARATUS AND ENERGY STORAGE SYSTEMS", filed on July 31, 2023, both of which are incorporated herein by reference in their entireties.

### TECHNICAL FIELD

This application relates to the field of energy storage technologies, and more specifically, to an energy storage apparatus and an energy storage system.

### BACKGROUND

In the related art, energy storage containers usually have two battery compartments, with an electrical compartment sandwiched between the two battery compartments. In such a case, the electrical compartment has two surfaces in contact with the battery compartments. When a battery disposed in the battery compartment experiences thermal runaway and the battery compartment requires water for cooling, there is a risk of water ingress from two directions into the electrical compartment.

### SUMMARY

This application aims to provide technical solutions for an energy storage apparatus and an energy storage system.

According to a first aspect of this application, an energy storage apparatus is provided. The energy storage apparatus includes:
an electrical compartment, wherein the electrical compartment has a first end and a second end that are disposed opposite to each other in a first direction;
a battery compartment, where the battery compartment is connected to a second end of the electrical compartment.

The electrical compartment has an electrical chamber and an opening portion communicating with the electrical chamber. The opening portion is disposed on an end face of the first end of the electrical compartment. An electrical compartment door is disposed in the opening portion. An electrical control device is disposed in the electrical chamber.

According to a second aspect of this application, an energy storage system is provided. The energy storage system includes a plurality of energy storage apparatuses according to the first aspect, and the plurality of energy storage apparatuses are electrically connected to each other.

The technical solutions used in this application can achieve the following beneficial effects.

In the energy storage apparatus provided in this embodiment of this application, only one surface of the electrical compartment is in contact with the battery compartment. In this case, when a battery disposed in the battery compartment experiences thermal runaway and the battery compartment requires water for cooling, water ingress may occur in the electrical compartment only from one direction, thereby reducing a risk of water ingress into the electrical compartment.

According to the following detailed description of example embodiments of this application with reference to the accompanying drawings, other features and advantages of this application become clear.

### BRIEF DESCRIPTION OF DRAWINGS

The accompanying drawings incorporated into this specification and constituting a part of this specification show embodiments of this application, and are used, together with descriptions of the accompanying drawings, to explain the principles of this application.
FIG. 1 is a diagram 1 of an overall structure of an energy storage apparatus according to an embodiment of this application;
FIG. 2 is a diagram 2 of an overall structure of an energy storage apparatus according to an embodiment of this application;
FIG. 3 is a diagram 1 of a structure of an electrical compartment in an energy storage apparatus according to an embodiment of this application;
FIG. 4 is a diagram 2 of a structure of an electrical compartment in an energy storage apparatus according to an embodiment of this application;
FIG. 5 is a diagram 1 of a structure of a first busbar assembly and a second busbar assembly in an energy storage apparatus according to an embodiment of this application;
FIG. 6 is a diagram 2 of a structure of a first busbar assembly and a second busbar assembly in an energy storage apparatus according to an embodiment of this application;
FIG. 7 is a diagram 3 of a structure of a first busbar assembly and a second busbar assembly in an energy storage apparatus according to an embodiment of this application;
FIG. 8 is a diagram 3 of a structure of an electrical compartment in an energy storage apparatus according to an embodiment of this application;
FIG. 9 is a diagram of an electrical assembly in an energy storage apparatus according to an embodiment of this application;
FIG. 10 is a diagram of providing an inlet hole at the bottom of an electrical compartment in an energy storage apparatus according to an embodiment of this application;
FIG. 11 is a diagram 1 of an electrical connection principle of an energy storage apparatus according to an embodiment of this application;
FIG. 12 is a diagram 2 of an electrical connection principle of an energy storage apparatus according to an embodiment of this application;
FIG. 13 is a diagram 3 of an electrical connection principle of an energy storage apparatus according to an embodiment of this application; and
FIG. 14 is a block diagram of an energy storage system according to an embodiment of this application.

### Reference numerals:

200: energy storage apparatus; 1: electrical compartment; 100: electrical compartment door; 101: protective plate; 102: cable bracket; 104: inlet hole; 11: battery management system; 12: first busbar assembly; 121: first sub-busbar; 122: second sub-busbar; 120: first insulating pillar; 13: second busbar assembly; 131: third sub-busbar; 132: fourth sub-busbar; 130: second insulating pillar; 14: third busbar assembly; 15: fourth busbar assembly; 16: power distribution cabinet; 17: lightning protection unit; 18: fire control unit; 19: fire extinguishing gas cylinder; 2: battery compartment; 3: temperature control compartment; 01: direct current cable; 3111: first main busbar; 3112: first branch busbar; 3113: second main busbar; 3114: second branch busbar; 3121a: third main busbar; 3122a: third branch busbar; 3123a: fourth main busbar; 3124a: fourth branch busbar; 3121b: fifth main busbar; 3122b: fifth branch busbar; 3123b: sixth main busbar; 3124b: sixth branch busbar; 1000: energy storage system.

### DESCRIPTION OF EMBODIMENTS

Example embodiments of this application are described in detail with reference to the accompanying drawings. It should be noted that, unless otherwise specified, relative arrangements, numerical expressions, and values of components and steps described in these embodiments do not limit the scope of this application.

The following description of at least one example embodiment is merely illustrative and shall not be construed as any limitation to this application, and application or use thereof.

Technologies, methods, and devices known by a person of ordinary skill in the art may not be discussed in detail, but the technologies, methods, and devices shall be considered as a part of this specification in appropriate circumstances.

In all examples shown and discussed herein, any specific value should be construed as merely an example rather than a limitation. Therefore, other examples of example embodiments may have different values.

It will be noted that, similar reference numerals and letters represent similar items in the following accompanying drawings. Therefore, once an item is defined in one accompanying drawing, the item does not need to be further discussed in the following accompanying drawings.

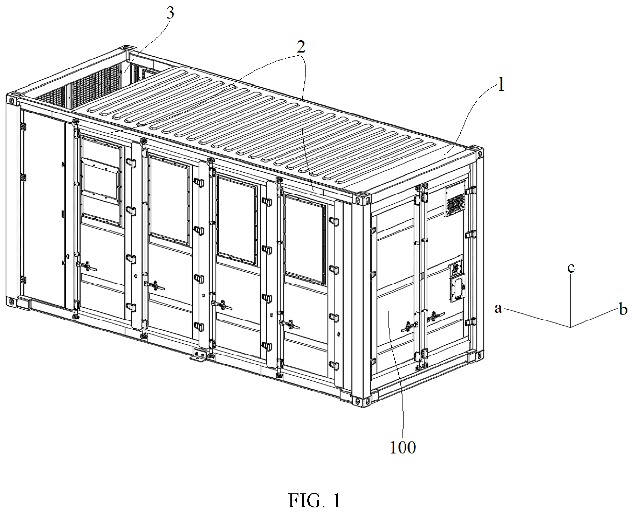

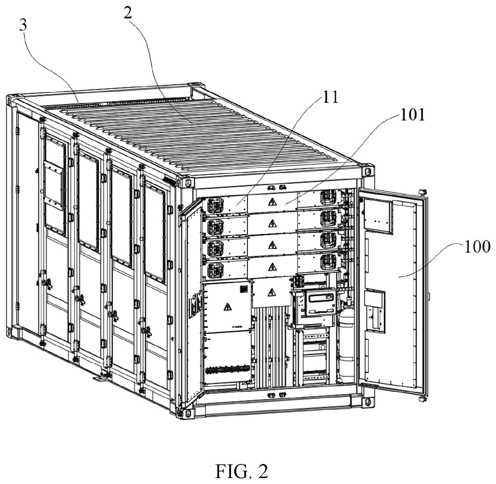

Referring to FIG. 1 to FIG. 10, some embodiments of this application provide an energy storage apparatus 200. The energy storage apparatus 200 includes an electrical compartment 1, a battery compartment 2, and a temperature control compartment 3. The electrical compartment 1 has a first end and a second end that are disposed opposite to each other in a first direction. The battery compartment 2 is connected to a second end of the electrical compartment 1.

The electrical compartment 1 has an electrical chamber and an opening portion communicating with the electrical chamber. The opening portion is disposed on an end face of the first end of the electrical compartment 1. An electrical compartment door 100 is disposed in the opening portion. An electrical control device is disposed in the electrical chamber.

Optionally, the energy storage apparatus 200 further includes the temperature control compartment 3, where the temperature control compartment 3 is connected to an end of the battery compartment 2 that is away from the electrical compartment 1; and the electrical compartment 1, the battery compartment 2, and the temperature control compartment 3 are sequentially arranged in the first direction. Alternatively, the energy storage apparatus 200 may be an energy storage container.

In the related art, in a length direction of an energy storage container, one battery compartment, one electrical compartment, and another battery compartment are sequentially arranged; and a compartment door and a maintenance panel of the electrical compartment are disposed in the length direction of the energy storage container. In such structural arrangement, if space of the battery compartment is to be increased in the limited container to increase battery capacity, devices in the electrical compartment need to be arranged as much as possible in a width direction of the container. As a result, when the compartment door is opened to maintain the devices in the electrical compartment, many devices are located at a back away from the compartment door, making a maintenance operation inconvenient. If the devices are disposed as close as possible to a front of the container to facilitate device maintenance, the electrical compartment occupies large space in the length direction of the container, that is, occupies space of the battery compartments on two sides of the electrical compartment. This does not contribute to increasing an overall battery capacity of the energy storage container. In addition, although this arrangement of the devices in the electrical compartment facilitates maintenance and repair, large space of the electrical compartment in the width direction of the container is wasted. This does not contribute to improving space utilization of the energy storage container.

In the energy storage apparatus 200 provided in this embodiment of this application, the electrical compartment 1, the battery compartment 2, and the temperature control compartment 3 are sequentially arranged in the first direction corresponding to a length direction of the energy storage apparatus 200. That is, the battery compartment 2 is sandwiched between the electrical compartment 1 and the temperature control compartment 3, and the electrical compartment 1 is located at an end portion of the energy storage apparatus 200. The electrical compartment 1 and the battery compartment 2 may be separated by a partition.

Advantages of the foregoing layout are as follows: First, in this energy storage apparatus 200, the electrical compartment door 100 of the electrical compartment 1 is disposed on the end face of the first end away from the battery compartment 2. In this case, all electrical control devices disposed in the electrical chamber of the electrical compartment 1 are arranged close to the electrical compartment door 100, reducing a size of the electrical compartment 1 in the first direction. Further, more space behind the electrical compartment door 100 may be reserved for the battery compartment 2. This helps increase capacity of the battery module disposed in the battery compartment 2, and increase energy storage density of the energy storage apparatus 200.

In addition, all the electrical control devices disposed in the electrical chamber are arranged close to the electrical compartment door 100, so that when the electrical compartment door 100 is opened, all the electrical control devices disposed in the electrical chamber are exposed. This facilitates debugging, maintenance, and replacement of the electrical control devices. After the electrical compartment door 100 is closed, stability and safety of the electrical control devices in the electrical compartment 1 can be maintained, impact of an external environment on the electrical control devices in the electrical compartment 1 can be reduced, and stability and safety of the energy storage apparatus 200 can be improved.

Furthermore, only one surface of the electrical compartment 1 is in contact with the battery compartment 2, that is, an end face of the second end of the electrical compartment 1 is in contact with the battery compartment 2. In this case, when a battery disposed in the battery compartment 2 experiences thermal runaway and the battery compartment 2 requires water for cooling, water ingress may occur in the electrical compartment 1 only from one direction, thereby reducing a risk of water ingress into the electrical compartment 1.

In addition, the electrical compartment door 100 in this application may be configured to open and close through rotation. When the electrical compartment door 100 is opened through rotation, there is a need to occupy space of the energy storage apparatus 200 in the first direction. Therefore, a large space needs to be reserved for opening and closing of the electrical compartment door 100. Therefore, the electrical compartment door 100 may alternatively be configured as a double-leaf door structure. In other words, the electrical compartment door 100 includes a first door body and a second door body. The first door body is hinged to a side of an opening of the electrical compartment 1, and the second door body is hinged to the other side of the opening of the electrical compartment 1. The first door body and the second door body may cooperate to close the opening of the electrical compartment 1. Alternatively, the opening of the electrical compartment 1 may be opened through rotation. Such a double-leaf door structure reduces space occupied during opening and closing of the electrical compartment door 100. The electrical compartment door 100 may alternatively be configured as a sliding type, a roller shutter type, or another type. The energy storage apparatus 200 may alternatively not dispose the foregoing electrical compartment door 100, and may further dispose a structure such as an operation panel, or an observation window at the end portion of the energy storage apparatus 200.

As shown in FIG. 1, a direction a is the foregoing first direction, and a direction b is a second direction.

In some embodiments, the electrical control device includes a first battery management system group, a second battery management system group, and an electrical connector. The first battery management system group and the second battery management system group are spaced apart in a second direction, and the second direction and the first direction are perpendicular to each other. The electrical connector is disposed between the first battery management system group and the second battery management system group, and the electrical connector is electrically connected to the first battery management system group and the second battery management system group.

Optionally, the first battery management system group may include one or more battery management systems; and the second battery management system group may include one or more battery management systems.

In addition, the electrical control devices further include a power distribution cabinet 16, a lightning protection unit 17, and a fire control unit 18. The first battery management system group and the second battery management system group are disposed in an upper part of the electrical chamber, and the power distribution cabinet 16 is disposed below the first battery management system group. A customer incoming cable connects to an interior of the power distribution cabinet 16 through an inlet hole directly below. The lightning protection unit 17 and the fire control unit 18 are sequentially disposed below the second battery management system group. A fire extinguishing gas cylinder 19 is further disposed in a lower right corner of the electrical chamber. This does not affect front maintenance of other electrical control devices and maximizes use of remaining space.

In this specific example, the electrical control devices disposed in the electrical chamber of electrical compartment 1, namely, the first battery management system group, the second battery management system group, the electrical connector, the power distribution cabinet 16, the lightning protection unit 17, and the fire control unit 18 are arranged in a planar manner. As described above, when the electrical compartment door 100 is opened, all the electrical control devices disposed in the electrical chamber of the electrical compartment 1 are exposed, because all the electrical control devices are arranged in the second direction and a third direction. The second direction corresponds to a width direction of the energy storage apparatus and the third direction corresponds to a height direction of the energy storage apparatus.

More specifically, the first battery management system group, the electrical connector, and the second battery management system group are arranged in the second direction; in the third direction, the power distribution cabinet 16 is located below the first battery management system group; and the lightning protection unit 17 and the fire control unit 18 are sequentially located below the second battery management system group. There is some remaining space below the fire control unit 18, which is reserved for an installation position of a new device required by a customer, providing a pre-layout for subsequent device positioning.

If the electrical control devices are arranged in the first direction, for example, an electrical control device I and an electrical control device II are arranged in the first direction, where the electrical control device I is disposed close to the opening portion of the electrical compartment 1 and the electrical control device II is disposed away from the opening portion of the electrical compartment 1, then when the electrical compartment door 100 is opened, the electrical control device I is exposed through the opening portion, but at least a part of the electrical control device II is hidden behind the electrical control device I. It is inconvenient to operate the electrical control device II. However, the layout of the electrical control devices in this embodiment of this application does not have this problem.

In addition, the layout of the electrical control devices in this embodiment of this application helps save space of the energy storage apparatus 100 in the length direction (the first direction), thereby helping reserve more space for the battery compartment 2.

Referring to FIG. 1, the first direction is the direction a in FIG. 1, the second direction is the direction b in FIG. 1, and the third direction is a direction c in FIG. 1.

In some embodiments, the first battery management system group and the second battery management system group are symmetrically disposed. For example, the first battery management system group and the second battery management system group are symmetrically arranged with respect to a central axis of the electrical chamber in the second direction. The first direction and the second direction are perpendicular to each other.

In this specific example, the first battery management system group and the second battery management system group are symmetrically arranged with respect to the central axis of the electrical chamber in the second direction. This symmetrical arrangement is more aesthetically pleasing and offers greater versatility. At least a part of a projection of the electrical connector in the second direction coincides with a central axis of the electrical compartment 1 in the second direction. Optimizing the layout of the electrical control devices improves maintenance efficiency of the electrical control devices, thereby helping detect and eliminate a failure in a timely manner and improving performance. In addition, the electrical connector is disposed in the middle, and the battery management system groups are symmetrically arranged, also demonstrating expandability and compatibility of the battery management system groups when connecting to an external control module or cable. This can further flatten the electrical control devices, further save space, reduce a size in a length direction, further increase storage space for the battery module, and increase energy storage density.

In some embodiments, the first battery management system group includes a plurality of battery management systems 11, where an electrical connection interface of each of the battery management systems 11 is electrically connected to one battery module disposed in the battery compartment 2.

In this specific example, each battery management system 11 is correspondingly electrically connected to one battery module and controls the battery module, that is, the battery management system 11 is in a one-to-one correspondence with the battery module disposed in the battery compartment 2, so that the battery management system 11 can better control the battery module.

In some embodiments, the electrical connection interface of the battery management system 11 is electrically connected to the battery module through a power harness, and the electrical connection interface is disposed on an end face of a side of the battery management system 11 that is close to the battery compartment 2.

In this specific example, the electrical connection interface of the battery management system 11 is specifically electrically connected to the battery module through the power harness, and the electrical connection interface of the battery management system 11 is disposed on the end face of the side of the battery management system 11 that is close to the battery compartment 2. This facilitates a connection between the battery management system 11 and the battery module, allowing for more organized arrangement of the power harness.

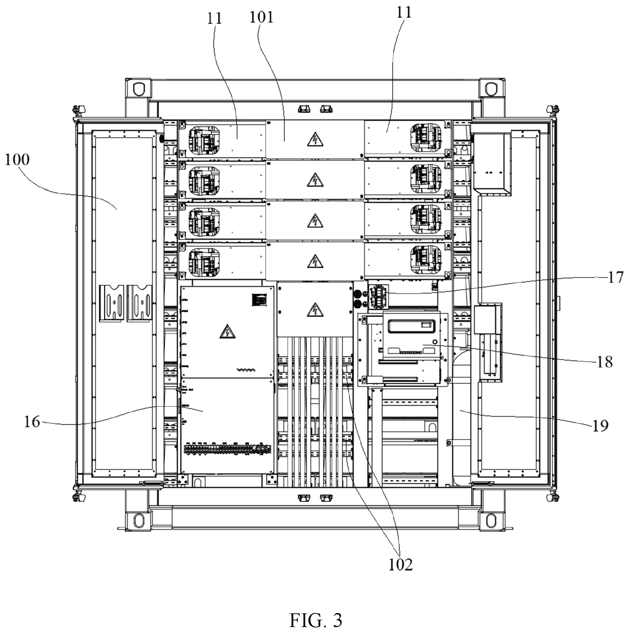

Optionally, each of the first battery management system group and the second battery management system group includes one to four battery management systems (BMSs) 11. As shown in FIG. 3, eight battery management systems 11 may be disposed according to an actual requirement. Four battery management systems 11 are disposed as the first battery management system group on an upper left side of the electrical chamber. The other four battery management systems 11 are disposed as the second battery management system group on an upper right side of the electrical chamber.

Each battery management system 11 is installed on a pillar disposed in the electrical chamber through bolt fastening, so that the battery management system 11 may be directly installed and replaced from a front of a maintenance panel of the battery management system 11, making an operation convenient and straightforward. A rear end of the battery management system 11 that is away from the opening portion of the electrical compartment 1 is connected to the battery module in the battery compartment 2 through the power harness.

In some embodiments, the electrical compartment 1 has a size L1 in the first direction, a size L2 in the second direction, and a size L3 in the third direction, and L1 may be set to be less than L2 and less than L3. 200 mm≤L1 ≤500 mm, 2300 mm≤L2≤2500 mm, and 2700 mm≤ L3≤2900 mm. For example, L1 may be set to 240 mm, 300 mm, 350 mm, or 400 mm; L2 may be set to 2300 mm, 2396 mm, 2400 mm, or 2450 mm; and L3 may be set to 2700 mm, 2750 mm, 2800 mm, or 2880 mm. It may be learned from the foregoing size descriptions that, the electrical compartment 1 is a flat structure. The electrical compartment 1 is disposed as a flat structure, so that space occupied by the electrical compartment 1 can be reduced and space utilization can be improved. Moreover, because the electrical compartment 1 adopts a structure with a door at the end face, the electrical compartment 1 may have a larger maintenance panel. The electrical control devices may be arranged in a flat manner. The flat electrical compartment 1 can facilitate installation and maintenance of the electrical control devices.

In addition, a ratio of L1 to L2, namely, L1/L2, may be set as a first predetermined value, and a ratio of L1 to L3, namely, L1/L3, may be set as a second predetermined value. The first and second predetermined values may be set within a range greater than 0 and less than 1, for example, 0.1, 0.2, 0.3, 0.5, or 0.8.

In addition, the battery compartment 2 has a size L4 in the first direction, a size L5 in the second direction, and a size L6 in the third direction, where 2400 mm≤L4≤4000 mm, 2300 mm≤L5≤2500 mm, and 2700 mm≤L6≤2900 mm. L4 may be adjusted based on storage of battery modules, and the range of L4 is not limited to the foregoing limitation, and may be determined based on a quantity of stored battery modules, or the like. L5 and L6 may be adjusted based on L2 and L3. L5 may be set to be the same as (or different from) L2, and L6 may alternatively be set to be the same as (or different from) L3.

Considering that the customer has different requirements for a charge/discharge rate of the energy storage apparatus 200, currents passing through the battery management system group connected to an outdoor direct current cable may also be different. Therefore, selected electrical connectors and outgoing cable specifications are different. In this energy storage apparatus 200, this difference lies in a change in a form of the electrical connector. With this current structural design, when the charge/discharge rate of the customer changes, there is only a need for a partial change in the electrical connector, while other devices and positions thereof do not need to be adjusted. The accompanying drawings use 0.5C and 1C rates as examples for illustration. The electrical connector herein may be slightly adjusted based on different rates to meet different requirements. The electrical connector is connected internally to the battery management system group and externally to a cable, showing expansibility and compatibility of the external connection of the battery management system group in this layout solution.

In some embodiments, a charge/discharge rate of the battery module disposed in the battery compartment 2 is a first rate; and a first set of external connection ports and a second set of external connection ports are disposed in the energy storage apparatus.

A positive terminal of the battery management system 11 in the first battery management system group is electrically connected to a positive terminal of the first set of external connection ports through the electrical connector. A negative terminal of the battery management system 11 in the first battery management system group is electrically connected to a negative terminal of the first set of external connection ports through the electrical connector. Optionally, there may be one battery management system 11 in the first battery management system group, and the positive/negative terminal of the battery management system 11 is a positive/negative terminal of the battery management system 11; there may alternatively be a plurality of battery management systems 11 in the first battery management system group, and the positive/negative terminal of the battery management system 11 is a positive/negative terminal of the multiple battery management systems 11.

A positive terminal of the battery management system 11 in the second battery management system group is electrically connected to a positive terminal of the second set of external connection ports through the electrical connector, and a negative terminal of the battery management system 11 in the second battery management system group is electrically connected to a negative terminal of the second set of external connection ports through the electrical connector. Optionally, there may be one battery management system 11 in the second battery management system group, and the positive/negative terminal of the battery management system 11 is a positive/negative terminal of the battery management system 11; there may alternatively be a plurality of battery management systems 11 in the second battery management system group, and the positive/negative terminal of the battery management system 11 is a positive/negative terminal of the multiple battery management systems 11.

In this specific example, when the charge/discharge rate of the battery module is the larger first rate, the two sets of external connection ports are used, namely, the first set of external connection ports and the second set of external connection ports. The first set of external connection ports is electrically connected to the battery management system 11 in the first battery management system group through the electrical connector. The second set of external connection ports is electrically connected to the battery management system 11 in the second battery management system group through the electrical connector.

Optionally, the foregoing first rate may be, for example, a 1C rate.

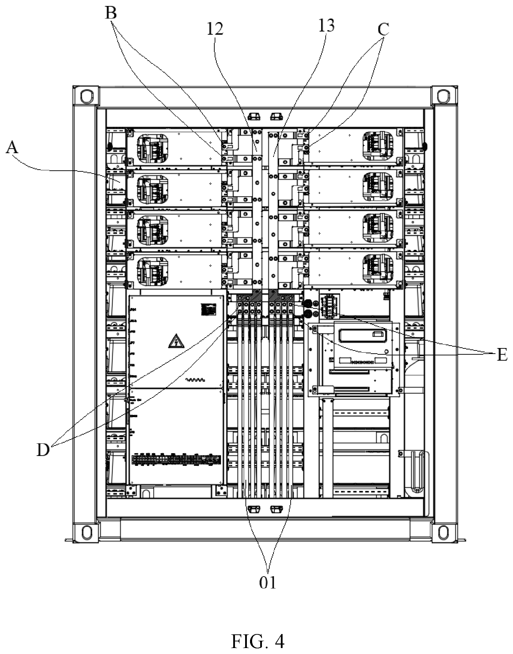

Referring to FIG. 4, in some embodiments, the electrical connector includes a first busbar assembly 12 and a second busbar assembly 13.

The first busbar assembly 12 is disposed close to the first battery management system group, and the battery management system 11 in the first battery management system group is electrically connected to the first set of external connection ports through the first busbar assembly 12.

The second busbar assembly 13 is disposed close to the second battery management system group, and the battery management system 11 in the second battery management system group is electrically connected to the second set of external connection ports through the second busbar assembly 13.

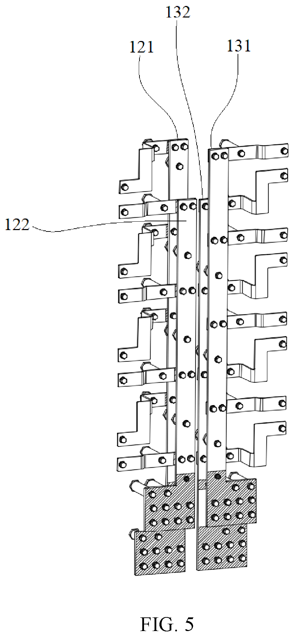

More specifically, referring to FIG. 4 and FIG. 5, the first busbar assembly 12 includes:
a first sub-busbar 121, where a positive wiring terminal of the battery management system 11 in the first battery management system group is electrically connected to a positive port of the first set of external connection ports through the first sub-busbar 121; and
a second sub-busbar 122, where the second sub-busbar 122 is insulated from the first sub-busbar 121, a negative wiring terminal of the battery management system 11 in the first battery management system group is electrically connected to a negative port of the first set of external connection ports through the second sub-busbar 122.

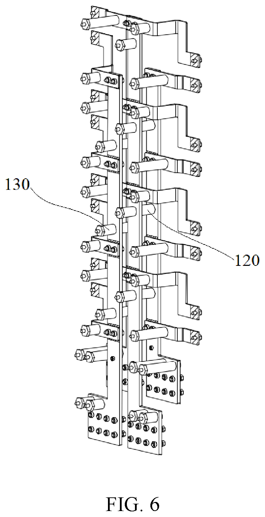

In some embodiments, as shown in FIG. 6, the first sub-busbar 121 and the second sub-busbar 122 are arranged in the first direction and connected to each other through a first insulating pillar 120.

In this specific example, the first sub-busbar 121 and the second sub-busbar 122 are arranged in the first direction and connected to each other through the first insulating pillar 120. This disposition can meet a creepage distance and an electrical clearance of the first sub-busbar 121 and the second sub-busbar 122.

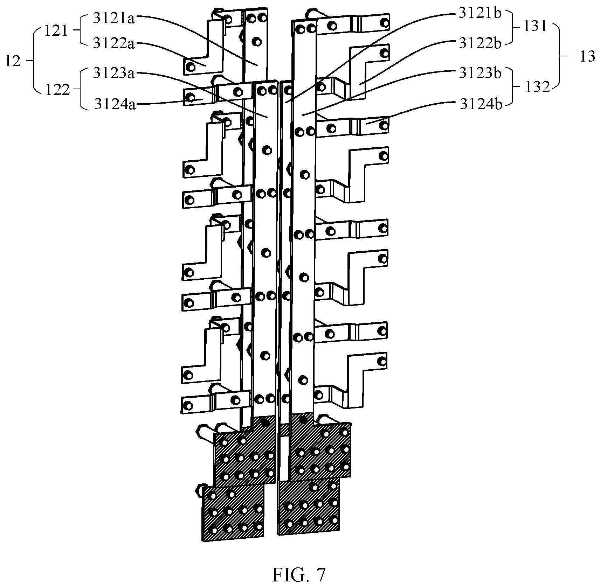

Referring to FIG. 7, the first sub-busbar 121 includes a third main busbar 3121a and a third branch busbar 3122a, and the second sub-busbar 122 includes a fourth main busbar 3123a and a fourth branch busbar 3124a. The third main busbar 3121a is electrically connected to the positive wiring terminal of the battery management system 11 in the first battery management system group and the positive port of the first set of external connection ports. The third branch busbar 3122a is electrically connected to the third main busbar 3121a. The third branch busbar 3122a is electrically connected to a positive wiring terminal of one or more battery management systems 11 in the first battery management system group. The fourth main busbar 3123a is electrically connected to the negative wiring terminal of the battery management system 11 in the first battery management system group and the negative port of the first set of external connection ports. The fourth main busbar 3123a and the third main busbar 3121a are spaced apart in the first direction, extend in a third direction, and are connected to each other through the first insulating pillar 120. The third direction and the first direction are perpendicular to each other. The fourth branch busbar 3124a is electrically connected to the fourth main busbar 3123a. The fourth branch busbar 3124a is electrically connected to a negative wiring terminal of the one or more battery management systems 11 in the first battery management system group.

There are a plurality of third branch busbars 3122a, and the plurality of third branch busbars 3122a are spaced apart in the third direction. Different battery management systems 11 may be connected through the plurality of third branch busbars 3122a and the plurality of fourth branch busbars 3124a, facilitating wiring.

Referring to FIG. 6 and FIG. 7, the third main busbar 3121a and the fourth main busbar 3123a are stacked in the length direction in the electrical compartment 1 and spaced apart. A first insulating pillar 120 is disposed between the third main busbar 3121a and the fourth main busbar 3123a, to separate and insulate the third main busbar 3121a and the fourth main busbar 3123a from each other. In addition, a first insulating pillar 120 is also disposed between the third main busbar 3121a and a bottom wall of the electrical compartment 1. The third main busbar 3121a and the fourth main busbar 3123a may be positioned on the bottom wall of the electrical compartment 1 by using bolts in a direction from the electrical compartment door 100 of the electrical compartment 1 to an isolator. The third main busbar 3121a, the fourth main busbar 3123a, and the isolator may be separated by using the first insulating pillar 120.

The third main busbar 3121a and the fourth main busbar 3123a extend in the height direction. This facilitates arrangement of the electrical connectors in the height direction, and battery management system groups located on two sides of the electrical connector may also be arranged in the height direction. This facilitates the electrical connection between the battery module and the battery management system groups, and further reduces space occupied by an electrical assembly. In addition, this facilitates the connection to the cable. With reference to the foregoing descriptions, the third branch busbar 3122a and the fourth branch busbar 3124a extend toward a direction away from a sub-busbar, and are configured to connect to a battery management system group at a corresponding position.

In addition, similar to a structure of the first busbar assembly 12, as shown in FIG. 4 and FIG. 5, the second busbar assembly 13 includes:
a third sub-busbar 131, where a positive wiring terminal of the battery management system 11 in the second battery management system group is electrically connected to a positive port of the second set of external connection ports through the third sub-busbar 131; and
a fourth sub-busbar 132, where the fourth sub-busbar 132 is insulated from the third sub-busbar 131, a negative wiring terminal of the battery management system 11 in the second battery management system group is electrically connected to a negative port of the second set of external connection ports through the fourth sub-busbar 132.

For example, as shown in FIG. 6, the third sub-busbar 131 and the fourth sub-busbar 132 are arranged in the first direction and connected to each other through a second insulating pillar 130. This disposition can meet a creepage distance and an electrical clearance of the third sub-busbar 131 and the fourth sub-busbar 132.

When the charge/discharge rate of the battery is the larger first rate, the battery management system 11 in the first battery management system group is electrically connected to the first set of external connection ports through the first busbar assembly 12, and the battery management system 11 in the second battery management system group is electrically connected to the second set of external connection ports through the second busbar assembly 13.

Specifically, the first sub-busbar 121 in the first busbar assembly 12 is responsible for electrically connecting the positive wiring terminal of the battery management system 11 in the first battery management system group to the positive port of the first set of external connection ports; and the second sub-busbar 122 in the first busbar assembly 12 is responsible for electrically connecting the negative wiring terminal of the battery management system 11 in the first battery management system group to the negative port of the first set of external connection ports.

The third sub-busbar 131 in the second busbar assembly 13 is responsible for electrically connecting the positive wiring terminal of the battery management system 11 in the second battery management system group to the positive port of the second set of external connection ports, and the fourth sub-busbar 132 in the second busbar assembly 13 is responsible for electrically connecting the negative wiring terminal of the battery management system 11 in the second battery management system group to the negative port of the second set of external connection ports.

Referring to FIG. 7, the third sub-busbar 131 includes a fifth main busbar 3121b and a fifth branch busbar 3122b, and the fourth sub-busbar 132 includes a sixth main busbar 3123b and a sixth branch busbar 3124b. The fifth main busbar 3121b is electrically connected to the positive wiring terminal of the battery management system 11 in the first battery management system group and the positive port of the first set of external connection ports. The fifth branch busbar 3122b is electrically connected to the fifth main busbar 3121b. The fifth branch busbar 3122b is electrically connected to the positive wiring terminal of the one or more battery management systems 11 in the first battery management system group. The sixth main busbar 3123b is electrically connected to the negative wiring terminal of the battery management system 11 in the first battery management system group and the negative port of the first set of external connection ports. The sixth main busbar 3123b and the fifth main busbar 3121b are spaced apart in the first direction, extend in the third direction, and are connected to each other through the second insulating pillar 130. The third direction and the first direction are perpendicular to each other. The sixth branch busbar 3124b is electrically connected to the sixth main busbar 3123b. The sixth branch busbar 3124b is electrically connected to the negative wiring terminal of the one or more battery management systems 11 in the first battery management system group.

There are a plurality of fifth branch busbars 3122b, and the plurality of fifth branch busbars 3122b are spaced apart in the third direction. Different battery management systems 11 may be connected through the plurality of fifth branch busbars 3122b and the plurality of sixth branch busbars 3124b, facilitating wiring.

Referring to FIG. 6 and FIG. 7, the fifth main busbar 3121b and the sixth main busbar 3123b are stacked in the length direction in the electrical compartment 1 and spaced apart. A second insulating pillar 130 is disposed between the fifth main busbar 3121b and the sixth main busbar 3123b, to separate and insulate the fifth main busbar 3121b and the sixth main busbar 3123b from each other. In addition, a second insulating pillar 130 is also disposed between the fifth main busbar 3121b and the bottom wall of the electrical compartment 1. The fifth main busbar 3121b and the sixth main busbar 3123b may be positioned on the bottom wall of the electrical compartment 1 by using bolts in the direction from the electrical compartment door 100 of the electrical compartment 1 to an isolator. The fifth main busbar 3121b, the sixth main busbar 3123b, and the isolator may be separated by using the second insulating pillar 130.

The fifth main busbar 3121b and the sixth main busbar 3123b extend in the height direction. This facilitates arrangement of the electrical connectors in the height direction, and battery management system groups located on two sides of the electrical connector may also be arranged in the height direction. This facilitates the electrical connection between the battery module and the battery management system groups, and further reduces space occupied by the electrical assembly. In addition, this facilitates the connection to the cable. With reference to the foregoing descriptions, the fifth branch busbar 3122b and the sixth branch busbar 3124b extend toward a direction away from a sub-busbar, and are configured to connect to a battery management system group at a corresponding position.

In some embodiments, a charge/discharge rate of the battery module disposed in the battery compartment 2 is a second rate, the second rate is less than the first rate, and a third set of external connection ports is disposed in the energy storage apparatus 100;
a positive wiring terminal of the battery management systems 11 in the first battery management system group and the second battery management system group is electrically connected to the positive port of the third set of external connection ports through the electrical connector; and
a negative wiring terminal of the battery management systems 11 in the first battery management system group and the second battery management system group is electrically connected to the negative port of the third set of external connection ports through the electrical connector.

For example, the second rate may be a 0.5C rate. When the charge/discharge rate of the battery is the smaller second rate, the energy storage apparatus 200 connects to a set of external connection ports, namely, the third set of external connection ports. The battery management systems 11 in the first battery management system group and the second battery management system group are both electrically connected to the third set of external connection ports through the electrical connector.

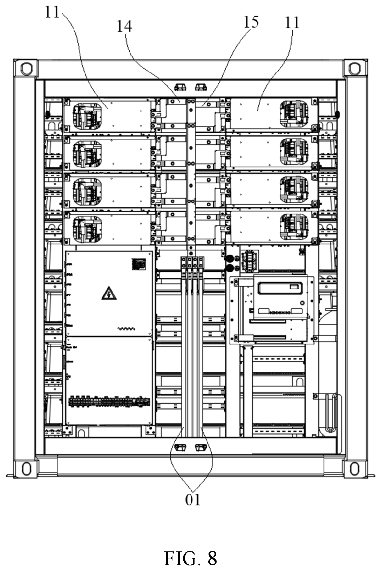

Referring to FIG. 8, in an embodiment, the electrical connector includes a third busbar assembly 14 and a fourth busbar assembly 15, and the third busbar assembly 14 is insulated from the fourth busbar assembly 15;
the positive wiring terminal of the battery management systems 11 in the first battery management system group and the second battery management system group is electrically connected to the positive port of the third set of external connection ports through the third busbar assembly 14; and
the negative wiring terminal of the battery management systems 11 in the first battery management system group and the second battery management system group is electrically connected to the negative port of the third set of external connection ports through the fourth busbar assembly 15.

In this specific example, when the charge/discharge rate of the battery is the smaller second rate, only two busbars need to be disposed. That is, different from the first busbar assembly 12 and the second busbar assembly 13 each further including a sub-busbar, each of the third busbar assembly 14 and the fourth busbar assembly 15 is a single busbar.

A positive wiring terminal of all battery management systems 11 in the first battery management system group and the second battery management system group is electrically connected to the positive port of the third set of external connection ports through the third busbar assembly 14. A negative wiring terminal of all the battery management systems 11 in the first battery management system group and the second battery management system group is electrically connected to the negative port of the third set of external connection ports through the fourth busbar assembly 15.

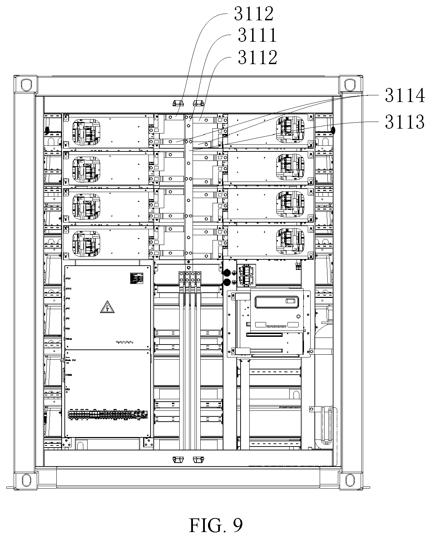

Referring to FIG. 9, the third busbar assembly 14 includes a first main busbar 3111, and the fourth busbar assembly 15 includes a second main busbar 3113. The first main busbar 3111 is electrically connected to the positive wiring terminal of battery management systems 11 in the first battery management system group and the second battery management system group and the positive port of the third set of external connection ports. The second main busbar 3113 is electrically connected to the negative wiring terminal of battery management systems 11 in the first battery management system group and the second battery management system group and the negative port of the third set of external connection ports. The second main busbar 3113 and the first main busbar 3111 are spaced apart in the first direction and extend in the third direction. An insulating member is disposed between the second main busbar 3113 and the first main busbar 3111. The third direction and the first direction are perpendicular to each other.

Referring to FIG. 9, the third busbar assembly 14 further includes a first branch busbar 3112, and the fourth busbar assembly 15 further includes a second branch busbar 3114. The first branch busbar 3112 is electrically connected to the first main busbar 3111. The first branch busbar 3112 is electrically connected to a positive wiring terminal of one or more battery management systems 11 in the first battery management system group and the second battery management system group. The second branch busbar 3114 is electrically connected to the second main busbar 3113. The second branch busbar 3114 is electrically connected to a negative wiring terminal of the one or more battery management systems 11 in the first battery management system group and the second battery management system group.

There are a plurality of first branch busbars 3112, and the plurality of first branch busbars 3112 are spaced apart in the third direction. Different battery management systems 11 may be connected through the plurality of first branch busbars 3112 and the plurality of second branch busbars 3114, facilitating wiring.

Certainly, the electrical connector may be installed on the bottom wall of the electrical compartment 1. Therefore, an insulating pillar may also be disposed between the electrical connector and the bottom wall of the electrical compartment 1, to ensure insulation performance between the electrical connector and the bottom wall of the electrical compartment 1.

Referring to FIG. 8 and FIG. 9, the first main busbar 3111 and the second main busbar 3113 are stacked in the length direction in the electrical compartment 1 and spaced apart. An insulating pillar is disposed between the first main busbar 3111 and the second main busbar 3113 to separate and insulate the first main busbar 3111 and the second main busbar 3113 from each other. In addition, the battery compartment 2 and the electrical compartment 1 may be separated by an isolator. An insulating pillar is also disposed between the first main busbar 3111 and the isolator. The first main busbar 3111 and the second main busbar 3113 may be positioned on the bottom wall of the electrical compartment 1 by using bolts in the direction from the electrical compartment door 100 of the electrical compartment 1 to an isolator. The first main busbar 3111, the second main busbar 3113, and the bottom wall of the electrical compartment 1 are separated by using the insulating pillar.

The first main busbar 3111 and the second main busbar 3113 extend in the height direction. The first main busbar 3111 may be connected to the plurality of first branch busbars 3112 arranged in the height direction. The second main busbar 3113 may be connected to the plurality of first branch busbars 3112 arranged in the height direction. First branch busbars 3112 extend from two sides of the first main busbar 3111 in the width direction, to connect battery management systems 11 on two sides of the electrical connector. Second branch busbars 3114 extend from two sides of the electrical compartment 1 in the width direction, to connect the battery management systems 11 on two sides of the electrical connector. This facilitates arrangement of the electrical connectors in the height direction, and battery management systems 11 located on two sides of the electrical connector may also be arranged in the height direction. This facilitates the electrical connection between the battery module and the battery management system groups, and further reduces space occupied by the electrical assembly. In addition, this facilitates the connection to the cable.

As described above, the plurality of battery management systems 11 are electrically connected to the first main busbar 3111 and the second main busbar 3113. This is suitable for a low-power mode. Only one electrical connector is needed to meet a charge/discharge requirements of the plurality of battery management systems 11. This simplifies the electrical connector structure, reduces costs, optimizes performance, and facilitates wiring.

The battery management system 11 is connected to external connection ports through electrical connectors, then connected to a PCS (energy storage converter), and then connected to an external power supply device through the PCS. The PCS converts between an alternating current and a direct current. Depending on different requirements of a user for the charge/discharge rate of the battery disposed in the battery compartment 2 in the energy storage apparatus, currents passing through the battery management system (BMS) 11 are also different.

In conclusion, when the charge/discharge rate of the battery is the larger first rate, two sets of external connection ports are used; when the charge/discharge rate of the battery is the smaller second rate, only one set of external connection ports needs to be used.

For the energy storage apparatus 200 provided in this embodiment of this application, a battery management system 11 on the left and a battery management system 11 on the right are symmetrically arranged. This symmetrical arrangement is more aesthetically pleasing and offers greater versatility. In addition, when a requirement of the user for the charge/discharge rate of the battery disposed in the battery compartment 2 in the energy storage apparatus changes, only a minor change in the electrical connector structure is needed, without changing structures and positions of remaining electrical control devices, thereby enhancing compatibility.

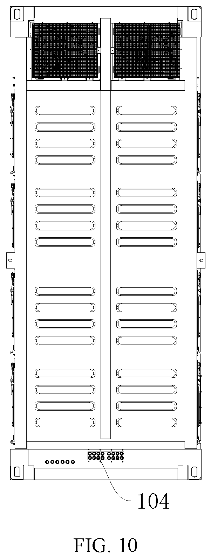

In an embodiment, at least one of the first set of external connection ports and the second set of external connection ports includes a direct current cable 01. The electrical connector is connected to an external energy storage converter through the direct current cable 01. Referring to FIG. 10, an inlet hole 104 is provided at the bottom of the electrical compartment 1. A part of the direct current cable 01 passes through the inlet hole 104 and is disposed in the electrical chamber. The direct current cable 01 extends in the electrical chamber in the third direction. The first direction and the third direction are perpendicular to each other. The inlet hole 104 is provided at the bottom of the electrical compartment door 100, preventing the cable from affecting opening and closing of the electrical compartment door 100, and facilitating assembly and maintenance of the energy storage apparatus 200.

In addition, the inlet hole 104 may be provided in the middle of the energy storage apparatus 200 in the width direction. The electrical connector may be disposed in the middle of the electrical compartment 1 in the width direction. The inlet hole 104 is provided in the middle of the electrical compartment 1 in the width direction, facilitating an electrical connection between the cable to the electrical connector in the electrical compartment 1, and simplifying wiring.

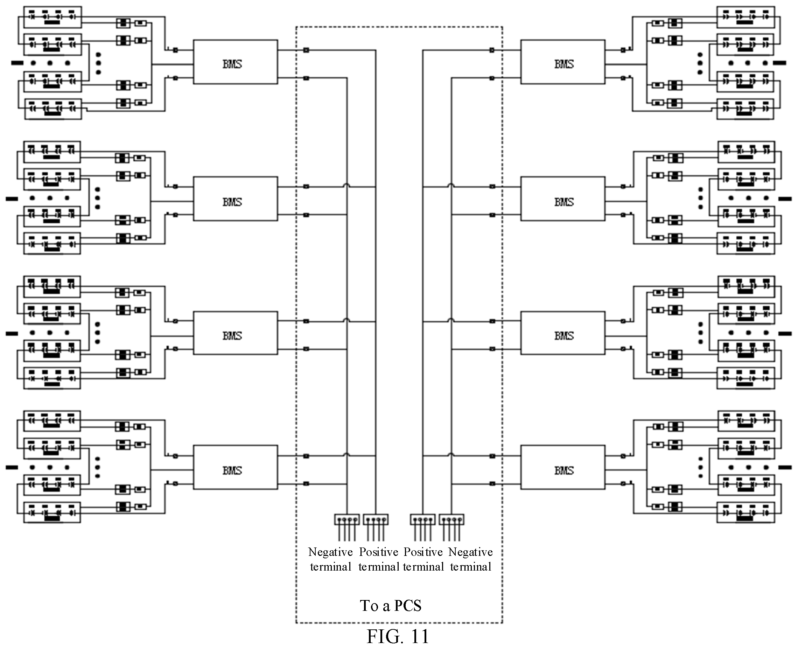

More specifically, referring to FIG. 11, a tail end of the first sub-busbar 121 is connected to a positive cable in a first set of direct current cables and then to the PCS. A tail end of the second sub-busbar 122 is connected to a negative cable in the first set of direct current cables and then to the PCS. When there are four battery management systems 11 in the first battery management system group, there are four positive cables and four negative cables in the first set of direct current cables.

A tail end of the third sub-busbar 131 is connected to a positive cable in a second set of direct current cables and then to the PCS. A tail end of the fourth sub-busbar 132 is connected to a negative cable in the second set of direct current cables and then to the PCS. When there are four battery management systems 11 in the second battery management system group, there are four positive cables and four negative cables in the second set of direct current cables.

Referring to FIG. 4, A represents a rear end of the battery management system 11; B represents a connection between the first busbar assembly 12 and the battery management system 11 in the first battery management system group; C represents a connection between the second busbar assembly 13 and the battery management system 11 in the second battery management system group; D represents a connection between the first busbar assembly 12 and the first set of direct current cables 01; and E represents a connection between the second busbar assembly 13 and the second set of direct current cables 01.

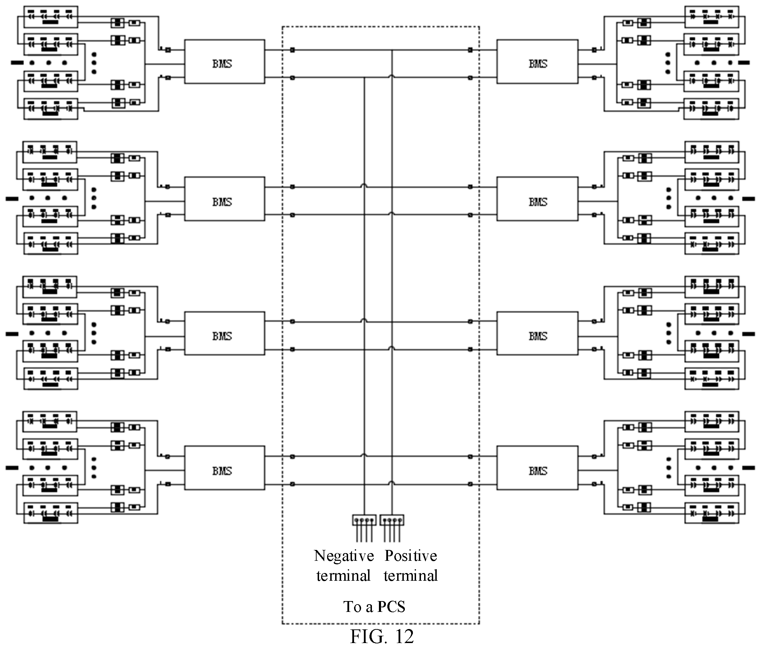

Referring to FIG. 12, a tail end of the third busbar assembly 14 is connected to a positive cable in the direct current cable and then to the PCS. A tail end of the fourth busbar assembly 15 is connected to a negative cable in the direct current cable and then to the PCS. When there are four battery management systems 11 in both the first battery management system group and the second battery management system group, there are four positive cables and four negative cables in the direct current cable.

Specifically, all of the first sub-busbar 121, the second sub-busbar 122, the third sub-busbar 131, the fourth sub-busbar 132; and the third busbar assembly 14 and the fourth busbar assembly 15 include main busbars extending in the third direction and branch busbars connected beside the main busbars. The branch busbar is configured to connect to each battery management system 11, and a tail end of the main busbar is connected to the direct current cable 01.

In addition, a main busbar of the third busbar assembly 14 and a main busbar of the fourth busbar assembly 15 may be spaced apart in the first direction and connected through an insulating pillar.

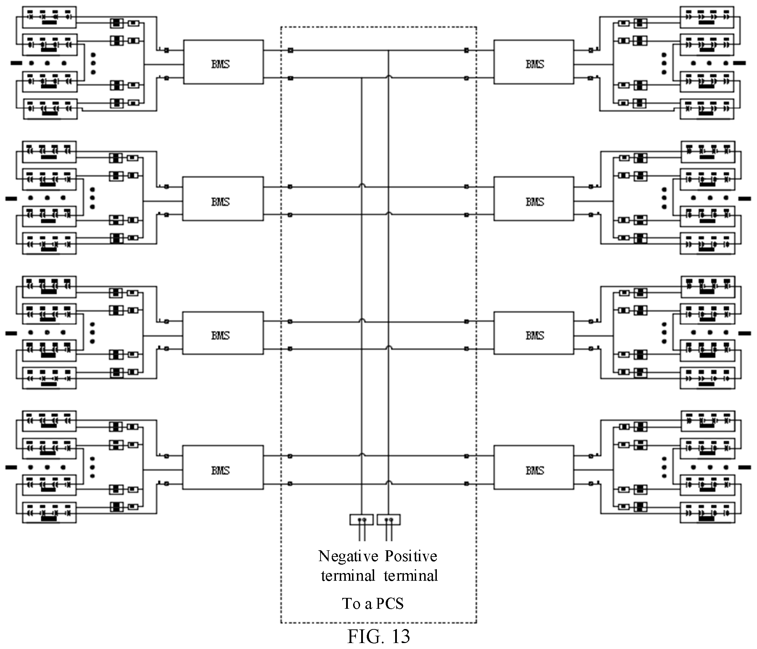

Referring to FIG. 13, when the charge/discharge rate of the battery is further reduced, for example, reduced to the third rate (0.25C), the electrical connector may be configured exactly as the same as when the charge/discharge rate of the battery module is the second rate, that is, the electrical connector includes the third busbar assembly 14 and the fourth busbar assembly 15.

A difference between the third rate and the second rate lies in that, at the smaller third rate, sizes of the third busbar assembly 14 and the fourth busbar assembly 15 can be reduced, for example, widths can be narrowed; and a smaller PCS may be used, and a quantity of direct current cables can also be reduced accordingly, for example, there are two positive cables and two negative cables in the direct current cable. Certainly, the same third busbar assembly 14 and fourth busbar assembly 15 as those used at the second rate may alternatively be used as an electrical connector at the third rate.

In conclusion, when the requirement of the user for the charge/discharge rate of the battery disposed in the battery compartment 2 in the energy storage apparatus 200 changes, only a minor change in the electrical connector structure is needed, without changing a structure and a position of remaining electrical control devices. Therefore, the battery management system 11 has strong expandability and compatibility at different charge/discharge rates, and can better meet different requirements of the user.

Referring to FIG. 3 and FIG. 10, in some embodiments, the electrical connector is connected to the PCS through the direct current cable 01 and then connected to the external power supply device. The inlet hole 104 is provided at the bottom of the electrical compartment 1. A part of the direct current cable 01 passes through the inlet hole 104 and is disposed in the electrical chamber. The direct current cable 01 extends in the electrical chamber in the third direction.

In this specific example, the direct current cable 01 is vertically arranged in the electrical chamber of the electrical compartment 1 in the third direction without bending, making installation convenient and quick. In addition, a tail end of the direct current cable 01 may be fastened to a cable bracket 102 disposed in the electrical chamber by using a cable tie, avoiding damage to the busbar structure due to a weight of the direct current cable 01.

The cable bracket 102 extends in the height direction, an end of the cable bracket 102 is opposite to the inlet hole 104, and the other end is used to connect to the electrical control device. The cable bracket 102 can easily provide support for the cable, reduce stress at a connection between the cable and the electrical control device, improve stability of the cable, optimize cable wiring, and facilitate maintenance of the electrical control device. There may be a plurality of inlet holes 104, and the plurality of inlet holes 104 may be provided in the middle of the end portion of the energy storage apparatus 200 in the width direction.

Referring to FIG. 3, in some embodiments, a protective plate 101 is disposed in the electrical chamber, and the protective plate 101 covers at least a part of a surface of the electrical control device that faces the opening portion.

In this specific example, disposition of the protective plate 101 can protect an operator and improve operational safety. For example, the protective plate 101 may cover a front of the busbar and a connection between the busbar and the direct current cable. Optionally, the protective plate 101 is fastened to a fastening and compatibility hole (which may be diagonally provided) of the BMS by using a bolt, a screw, or the like, facilitating maintenance and disassembly. The protective plate 101 may be a transparent PC board (polycarbonate board, polycarbonate board).

In some embodiments, in the first direction, a ratio of a size of the battery compartment 2 to a size of the electrical compartment 1 is A1, where 10:1≤A1≤20:1.

In this specific example, a size of the energy storage apparatus 200 is arranged as much as possible in the first direction for the battery compartment 2, increasing a volume of the battery compartment, and thereby increasing a capacity of the battery module.

In addition, in the foregoing embodiment, C is used to represent the charge/discharge capacity rate of the battery module. 1C represents current intensity for full discharge of the battery in one hour. For example, if a 18650 battery with a rated capacity of 2200 mA·h is fully discharged in one hour at a 1C rate. In this case, a discharge current is 2200 mA.

Charge/Discharge rate=Charge/Discharge current/Rated capacity. For example, when a battery with a rated capacity of 100 A·h is discharged at 20 A, a discharge rate is 0.2C. A discharge C-rate of the battery, for example, 1C, 2C, or 0.2C, is a discharge speed of the battery, and represents a measure of how quickly the battery discharges. For example, if a used capacity is fully discharged in one hour, it is referred to as 1C discharge; if it is fully discharged in five hours, it is referred to as 1/5=0.2C discharge. Generally, a battery capacity can be tested by using different discharge currents. For example, for a 24 A·h battery, a 2C discharge current is 48 A, and a 0.5C discharge current is 12 A.

To further improve stability and safety of the electrical connector, avoid accidental contact, and avoid a short circuit caused by an environmental change, in this application, an epoxy resin layer is coated on a surface of the electrical connector. This can further improve insulation performance of the electrical connector 1 and ensure a safe and stable electrical connection.

The energy storage apparatus 200 according to this embodiment of this application may further include an insulator that separates the battery compartment 2 from the electrical compartment 1, thereby isolating the battery module from the electrical control device, and improving stability and safety of the energy storage apparatus 200. In addition, the electrical compartment 1 that houses the electrical control devices is disposed at the end portion of the energy storage apparatus 200 and is configured with a door at the end portion. This facilitates installation and maintenance of the electrical control devices, and allows for a flattened design of the electrical compartment 1, thereby optimizing performance and space utilization of the energy storage apparatus 200.

In addition, when the battery module fails, only one side of the electrical control device is close to the battery module. This can reduce impact of a battery module failure on the electrical control device, reduce a risk of the electrical control device, and reduce impact on the electrical control device during handling of the battery failure.

With reference to the foregoing embodiment, the cable bracket 102 is disposed in the electrical compartment 1. The cable bracket 102 may alternatively extend in the height direction. In this case, the cable bracket 102 may be opposite to the first main busbar 3111 and the second main busbar 3113, to position and guide a cable connected to the first main busbar 3111 and the second main busbar 3113, thereby effective positioning the cable and optimizing performance of the energy storage apparatus 200.

With reference to the foregoing descriptions, in some examples, the battery management system 11 is connected to the electrical connectors, which are divided into two sets (as shown in FIG. 7). Each set of electrical connectors is used to connect four battery management systems 11, and exhibits staggered spatial distribution. Each busbar structure includes a first main busbar 3111 and a second main busbar 3113. The first main busbar 3111 and the second main busbar 3113 are fastened to each other through a rubber insulating pillar, to meet a creepage distance and an electrical clearance. The busbar structure is coated with epoxy resin, with a positive terminal in red and a negative terminal in black. Considering compatibility, two sets of busbar structures are interchangeably used. As shown in FIG. 4, tail ends of the first main busbar 3111 and the second main busbar 3113 are connected to the outdoor direct current cable 01. Each set of busbar structures is connected to four positive cables and four negative cables outdoors, to meet a charge/discharge requirement of the battery. The direct current cable 01 enters the container through the inlet hole (with a waterproof gland installed) at the bottom of the container. With this busbar structure, a customer cable can be connected vertically upward without bending, making the operation convenient and quick. In addition, a tail end of the cable may be fastened to the cable bracket 102 by using a cable tie, avoiding damage caused by continuous stress on a copper busbar structure due to a weight of the cable. Currently, this design meets a requirement of an energy storage system to charge and discharge at the C-rate.

Considering a safety factor, transparent PC boards are used for protection at a side of the electrical connector that is close to the electrical compartment door 100, and a connection position of the customer incoming cable. This ensures that, in a normal case, when a maintenance door is opened, an operator cannot directly touch a direct current high-voltage cable, safeguarding safety of the operator. The transparent PC board is fastened to a fastening and compatibility hole of the battery management system 11 by using a bolt, facilitating maintenance and disassembly.

In the layout in this application, only one surface of the electrical compartment 1 is in contact with the battery compartment 2, thereby reducing a risk. Positions and arrangement of the battery management system group and the electrical connector in the electrical compartment 1 remain unchanged. Positions and arrangement of another electrical control material and another fire protection material may be proactively adjusted according to a customer requirement, to accommodate an appropriate spatial layout for future additional devices.

In this application, at least one of the main busbar and the branch busbar may be configured as a copper busbar.

According to some other embodiments of this application, an energy storage system 1000 is provided.

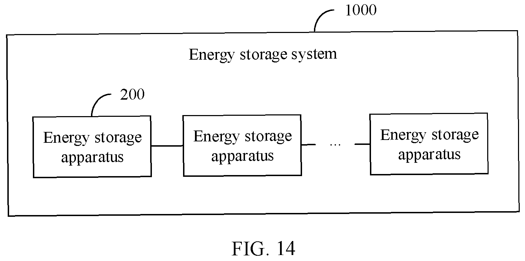

Referring to FIG. 14, the energy storage system 200 includes a plurality of energy storage apparatuses 200, and the plurality of energy storage apparatuses 200 are electrically connected to each other.

In the foregoing embodiments, differences between embodiments are mainly described. Different optimization features between embodiments may be combined into a better embodiment, provided that there is no contradiction. For brevity, details are not described herein again.

Although some specific embodiments of this application are described in detail by using examples, a person skilled in the art will understand that the foregoing examples are merely for description, but are not intended to limit the scope of this application. A person skilled in the art will understand that modifications may be made to the foregoing embodiments without departing from the spirit and scope of this application. The scope of this application is limited only by the appended claims.

## Claims

1. An energy storage apparatus (200), wherein the energy storage apparatus (200) comprises:
an electrical compartment (1), the electrical compartment (1) having a first end and a second end that are disposed opposite to each other in a first direction;
a battery compartment (2), the battery compartment (2) being connected to the second end of the electrical compartment (1); and
a temperature control compartment (3), the temperature control compartment (3) being connected to an end of the battery compartment (2) that is away from the electrical compartment (1); and
the electrical compartment (1) has an electrical chamber and an opening portion communicating with the electrical chamber; the opening portion is disposed on an end face of the first end of the electrical compartment (1); an electrical compartment door (100) is disposed in the opening portion; an electrical control device is disposed in the electrical chamber; and the electrical compartment (1), the battery compartment (2), and the temperature control compartment (3) are sequentially arranged in the first direction.

2. The energy storage apparatus (200) according to claim 1, wherein the electrical control device comprises:
a first battery management system group;
a second battery management system group, the first battery management system group and the second battery management system group being spaced apart in a second direction, and the second direction and the first direction being perpendicular to each other; and
an electrical connector, the electrical connector being disposed between the first battery management system group and the second battery management system group, and the electrical connector being electrically connected to the first battery management system group and the second battery management system group.

3. The energy storage apparatus (200) according to claim 2, wherein the first battery management system group and the second battery management system group are symmetrically disposed.

4. The energy storage apparatus (200) according to claim 2 or 3, wherein at least a part of a projection of the electrical connector in the second direction coincides with a central axis of the electrical compartment in the second direction.

5. The energy storage apparatus (200) according to any one of claims 2 to 4, wherein the first battery management system group comprises:
a plurality of battery management systems (11), an electrical connection interface of each of the battery management systems (11) being electrically connected to one battery module disposed in the battery compartment (2).

6. The energy storage apparatus (200) according to claim 5, wherein the electrical connection interface of the battery management system (11) is electrically connected to the battery module through a power harness, and the electrical connection interface is disposed on an end face of a side of the battery management system (11) that is close to the battery compartment (2).

7. The energy storage apparatus (200) according to any one of claims 1 to 6, wherein a charge/discharge rate of the battery module disposed in the battery compartment (2) is a first rate, and a first set of external connection ports and a second set of external connection ports are disposed in the energy storage apparatus;
a positive terminal of the battery management system (11) in the first battery management system group is electrically connected to a positive terminal of the first set of external connection ports through the electrical connector, and a negative terminal of the battery management system (11) in the first battery management system group is electrically connected to a negative terminal of the first set of external connection ports through the electrical connector; and
a positive terminal of a battery management system (11) in the second battery management system group is electrically connected to a positive terminal of the second set of external connection ports through the electrical connector, and a negative terminal of the battery management system (11) in the second battery management system group is electrically connected to a negative terminal of the second set of external connection ports through the electrical connector.

8. The energy storage apparatus (200) according to claim 7, wherein the electrical connector comprises:
a first busbar assembly (12), the first busbar assembly (12) being disposed close to the first battery management system group, and the battery management system (11) in the first battery management system group being electrically connected to the first set of external connection ports through the first busbar assembly (12); and
a second busbar assembly (13), the second busbar assembly (13) being disposed close to the second battery management system group, and the battery management system (11) in the second battery management system group being electrically connected to the second set of external connection ports through the second busbar assembly (13).

9. The energy storage apparatus (200) according to claim 8, wherein the first busbar assembly (12) comprises:
a first sub-busbar (121), a positive wiring terminal of the battery management system (11) in the first battery management system group being electrically connected to a positive port of the first set of external connection ports through the first sub-busbar (121); and
a second sub-busbar (122), the second sub-busbar (122) being insulated from the first sub-busbar (121), a negative wiring terminal of the battery management system (11) in the first battery management system group being electrically connected to a negative port of the first set of external connection ports through the second sub-busbar (122).

10. The energy storage apparatus (200) according to claim 9, wherein the first sub-busbar (121) and the second sub-busbar (122) are arranged in the first direction and connected to each other through a first insulating pillar (120).

11. The energy storage apparatus (100) according to claim 9 or 10, wherein the first sub-busbar (121) comprises:
a third main busbar (3121a), the third main busbar (3121a) being electrically connected to the positive wiring terminal of the battery management system (11) in the first battery management system group and the positive port of the first set of external connection ports; and
a third branch busbar (3122a), the third branch busbar (3122a) being electrically connected to the third main busbar (3121a), and the third branch busbar (3122a) being electrically connected to a positive wiring terminal of one or more battery management systems (11) in the first battery management system group.

12. The energy storage apparatus (200) according to claim 11, wherein the second sub-busbar (122) comprises:
a fourth main busbar (3123a), the fourth main busbar (3123a) being electrically connected to the negative wiring terminal of the battery management system (11) in the first battery management system group and the negative port of the first set of external connection ports; the fourth main busbar (3123a) and the third main busbar (3121a) being spaced apart in the first direction, extending in a third direction, and being connected to each other through the first insulating pillar (120); and the third direction and the first direction being perpendicular to each other; and
a fourth branch busbar (3124a), the fourth branch busbar (3124a) being electrically connected to the fourth main busbar (3123a), and the fourth branch busbar (3124a) being electrically connected to a negative wiring terminal of the one or more battery management systems (11) in the first battery management system group.

13. The energy storage apparatus (200) according to claim 12, wherein there are a plurality of third branch busbars (3122a), and the plurality of third branch busbars (3122a) are spaced apart in the third direction.

14. The energy storage apparatus (200) according to any one of claims 1 to 5, wherein a charge/discharge rate of the battery module disposed in the battery compartment (2) is a second rate, the second rate is less than a first rate, and a third set of external connection ports is disposed in the energy storage apparatus (200);
a positive wiring terminal of battery management systems (11) in the first battery management system group and the second battery management system group is electrically connected to a positive port of the third set of external connection ports through the electrical connector; and
a negative wiring terminal of the battery management systems (11) in the first battery management system group and the second battery management system group is electrically connected to a negative port of the third set of external connection ports through the electrical connector.

15. The energy storage apparatus (200) according to claim 14, wherein the electrical connector comprises a third busbar assembly (14) and a fourth busbar assembly (15), and the third busbar assembly (14) is insulated from the fourth busbar assembly (15);
the positive wiring terminal of the battery management systems (11) in the first battery management system group and the second battery management system group is electrically connected to the positive port of the third set of external connection ports through the third busbar assembly (14); and
the negative wiring terminal of the battery management systems (11) in the first battery management system group and the second battery management system group is electrically connected to the negative port of the third set of external connection ports through the fourth busbar assembly (15).

16. The energy storage apparatus (200) according to claim 15, wherein
the third busbar assembly (14) comprises:
a first main busbar (3111), the first main busbar (3111) being electrically connected to the positive wiring terminal of the battery management systems (11) in the first battery management system group and the second battery management system group and the positive port of the third set of external connection ports; and
the fourth busbar assembly (15) comprises:
a second main busbar (3113), the second main busbar (3113) being electrically connected to the negative wiring terminal of the battery management systems (11) in the first battery management system group and the second battery management system group and the negative port of the third set of external connection ports; the second main busbar (3113) and the first main busbar (3111) being spaced apart in the first direction and extend in the third direction; an insulating member being disposed between the second main busbar (3113) and the first main busbar (3111); and the third direction and the first direction being perpendicular to each other.

17. The energy storage apparatus (200) according to claim 16, wherein
the third busbar assembly (14) further comprises:
a first branch busbar (3112), the first branch busbar (3112) being electrically connected to the first main busbar (3111), and the first branch busbar (3112) being electrically connected to a positive wiring terminal of one or more battery management systems (11) in the first battery management system group and the second battery management system group; and
the fourth busbar assembly (15) further comprises:
a second branch busbar (3114), the second branch busbar (3114) being electrically connected to the second main busbar (3113), and the second branch busbar (3114) being electrically connected to a negative wiring terminal of the one or more battery management systems (11) in the first battery management system group and the second battery management system group.

18. The energy storage apparatus (200) according to claim 17, wherein there are a plurality of first branch busbars (3112), and the plurality of first branch busbars (3112) are spaced apart in the third direction.

19. The energy storage apparatus (200) according to any one of claims 1 to 18, wherein a protective plate (101) is disposed in the electrical chamber, and the protective plate (101) covers at least a part of a surface of the electrical control device that faces the opening portion.

20. The energy storage apparatus (200) according to any one of claims 1 to 19, wherein in the first direction, a ratio of a size of the battery compartment (2) to a size of the electrical compartment (1) is A1, wherein
10:1≤A1≤20:1.

21. The energy storage apparatus (200) according to claim 2, wherein the battery compartment (2) has a size L1 in the first direction, a size L2 in the second direction, and a size L3 in a third direction, wherein the third direction is perpendicular to both the first direction and the second direction, 200 mm≤L1≤500 mm, 2300 mm≤L2≤2500 mm, and 2700 mm≤L3≤2900 mm.

22. An energy storage system (1000), wherein the energy storage system (1000) comprises a plurality of energy storage apparatuses (200) according to any one of claims 1 to 21, the plurality of energy storage apparatuses (200) are electrically connected to each other.
